# EUROPEAN PATENT APPLICATION

(11) **EP 1 876 152 A2**
(43) Date of publication of application: **09.01.2008**
(21) Application number: 07008619.4
(22) Date of filing: 27.04.2007
(51) Int. Cl.: C04B 7/42, C04B 11/26, C04B 11/00

(54) **Process for physico-chemical adaptation of chemical gypsum or phosphogypsum for use in cement formulations and other construction materials**

(30) Priority: 03.07.2006 VE 150706
(71) Applicant: Tripoliven C.A., Carabobo (VE); Fundación Instituto de Ingeniería para Investigación y Desarrollo Tecnológico Carretera Nacional, Edo. Miranda (VE)
(72) Inventor: Andara Giannotti, Miriam Elena Urbanizacion Ruis Pineda, Planta Baja Parroquia Caricua, Caracas, 1000 (VE); Rus Romero, Jose R., Caracas, 1020 (VE); Torres, Carlos Di Pasquale, San Antonio de Los Altos, Edo Miranda 1201 (VE); Ascanio Lopez, Morvin Urbanizacion Valles de Chara, Municipio Cristobal Rojas Charallave-Edo Miranda 1040 (VE); Oropeza, Jose, Piso 8, App. 8 El Parral, Valencia-Edo Carabobo (VE); Suarez, Juan Carlos, Piso 9, App. 9-D Las Chimeneas Valencia, Edo. Carabobo (VE)
(74) Representative: Ungria Lopez, Javier

(57) **Abstract**

The present invention relates to the application of a novel process for the chemical and physical adaptation of chemical gypsum or phosphogypsum coming from the production of phosphoric acid and its use as a setting retarding agent in Portland type cements or in the preparation of other materials for construction. The adaptation is based on reactions in the solid state or in the presence of small amounts of water between the phosphogypsum and the agglutinating-neutralising agents, primarily by the application of oxy- and hydroxy-compounds, without rejecting the respective carbonates, of magnesium, aluminium and mainly calcium carbonate, along with mixtures thereof and later preparation of self-hardening pellets which facilitate its transport and handling.

The technological process associated with the invention notably simplifies the number and type of unitary operations, and the preparation of pellets of mixtures of phosphogypsum, along with a reduction in energy costs due to operating at low temperatures (150 °C) for short times (1-2 hours) and a reduction in the quantities of neutralising agents, and it also minimise the volume of water required in the process.

## Description

### STATE OF THE ART

In the production of phosphoric acid, phosphoric rock is used, which is leached with sulphuric acid according to various widely known processes such as the di-hydrate, hemi-hydrate and hemi-di-hydrate, or in accordance with the name of the companies that introduced the technology, for example, Dorr-Oliver, Nissan H and C, Fissons, Lurgi, etc. During the process, the desired product is obtained, H₃PO₄, along with a by-product known as phosphogypsum or chemical gypsum, CaSO₄ .2H₂O, according to the reaction:

Ca₃(PO₄)₂ + 3H₂SO₄ + 6H₂O → 2H₃PO₄ + 3CaSO₄.2H₂O

This phosphogypsum basically consists of fine crystals, tabular or rosette in shape, of calcium sulphate di-hydrate or hemi-hydrate or its mixtures depending on the process, with sizes between 50 and 150 µm, along with partially digested rock or the insoluble fraction of the phosphoric rock, namely, silica, oxides of iron, aluminium, magnesium, and other species of the same metals though substituted with phosphates or polyphosphates. In addition, found adsorbed in the phosphogypsum crystals or substituting the CaSO₄ in the crystalline structure are inorganic compounds such as H₃PO₄, H₂SO₄ and HF, the product of incomplete reactions (H₂SO₄) and of normal deficiencies in the solid-liquid separation, which grants an acidic character to the waste and gives rise to one of the main problems when it comes to its application for construction materials or as a substitute for natural gypsum in cement manufacture.

During the production of H₃PO₄, between four (4) and five (5) metric tons of by-product are produced for every metric ton of acid, depending on the process applied. This characteristic of the process requires the construction of large tail lagoons or open areas for storing and stacking the damp solid. Owing to the acidic nature of the waste, it can affect the environment by means of leaching, generation of dust, and also certain phosphoric rocks contain radioactive elements (uranium, thorium, radium), which compels their confinement. Equally, the disposing of the waste takes up large areas of land, which means that it becomes unusable for any other purpose until the plant has been closed down and the area has been environmentally recovered. As an example, it can be mentioned that for the years 1981-1982, the world annual production stood at 110 million tons.

The requirements for obtaining alternative methodologies for re-utilisation or disposal of phosphogypsum has led to a series of technologies and research works that would permit an economical solution, or at least one that would be environmentally acceptable, to the problem of phosphogypsum.

The technologies associated with the disposal of phosphogypsum normally focus on evaluating the environmental impact of the selected method or the economies achieved with the application of the available technology.

Moreover, a great many studies have been conducted aimed at the exploitation and re-utilisation of phosphogypsum in a wide range of applications, which gives an idea of the scale of the problem. Studies on alternative applications have been aimed at three main areas: the agronomical area (fertilisers and soil conditioners), as material for construction and as raw material for obtaining chemical products and materials (sulphur, cements, calcium salts and other sulphates).

In the agronomical area, its main use concerns the conditioning of acid, clayey soils, with a high content of sodium salts, soils with erosion problems, low percolability, as a way of contributing sulphates for specific crops, and as direct application and low formulation fertiliser.

Studies for obtaining other by-products or raw materials were based on the application of technologies associated with pyrometallurgy, such as the decomposition of phosphogypsum in the presence of coke in order to obtain sulphur and cements, along with calcium sulphide. Other works also included the preparation of fertilisers, K₂SO₄, by means of chemical digestion in the presence of nutrients such as KCl and NH₄NO₃ or NH₃.

Finally, an area where there has been an abundant amount of research works and where proven industrial applications have been found is in materials for construction and civil works. In this area, such results were to be expected, given the large tonnages normally required for meeting the demand for construction materials, especially where they are scarce or could be economically competitive.

At the international level, phosphogypsum has been used as an additive for regulating the setting time, wholly or partially replacing mineral gypsum. In the majority of cases, prior treatment of the phosphogypsum has been required in order to reduce or eliminate the impurities which have a negative affect on the setting time and on the compression strength, among other characteristics of the prepared cement. So, we find that the first application at the industrial level was in Japan, where phosphogypsum is thermally treated by means of calcination at 800 °C (conversion to the anhydride, CaSO₄) and mixed with bases such as CaO, with later agglomeration in order to obtain retardant for cements. Likewise, the company ONODA developed a technology for obtaining gypsum for construction, stucco and plaster of Paris, but in this case applying chemical methods such as washing and neutralisation, filtering and drying (US 3998596, US 3928053).

Similarly, Saltgitter patented a technology based on counter-current washing treatment in settling tanks, neutralisation with strong sodium or calcium bases, separation of the phosphogypsum by hydrocyclones in order to eliminate impurities (free P₂O₅, F⁻ and others) and finally drying and calcination, in order to obtain a material suitable for applications in the cement industry.

Other patents (CN1085879, CN1394823) by means of use of additives such as aluminium salts, clays, paper manufacturing liquors, CaO or Ca(OH)₂ treat phosphogypsum as far as obtaining a material suitable for use.

In other patent documents (CN1389421, CN1389422), unspecified modifying agents are applied to chemical gypsum and later mixing, massing, curing, drying in confined atmospheres for up to 48 hours, with later conforming or calcination at between 600 and 900 °C, and finally agglomeration (CN1394823).

Other works have been oriented towards more direct applications, with a minimum of treatment and processing of the material, among which can be mentioned:
- Mixing with agglomerate (Portland cement), cementing agents (lime), water and sand in order to prepare construction materials (US 687107) or filling materials for roads and dikes (US 5261957).
- Mixtures with fly ash and lime for preparation of low cost mortars.
- Mixtures with soils, sands, rocks, ash or slag for fill material (US 6059447).
- Mixture with Portland cement, pozzolanic material and lime for construction materials (US 6241815).
- Mixtures with hydrated lime or quicklime for low density, high strength, construction materials (US 4540439, US 3945841, US 364932).
- Reinforcement with fibre glass for the manufacture of boards (US 6159410, US 6110575).
- Mixture of dry gypsum with lime (quick or slaked) and natural and synthetic surfactant agents (foaming agents) for the production of plaster (US 5523954).

There likewise exist patents aimed at processes for purifying, drying and granulating of phosphogypsum, such as:
- Removal of radioactive isotopes by additions of a decontaminating solution by means of vigorous stirring (US 20030163014).
- Purification method by crystallisation of very fine particles of hemi-hydrate (US 4424196, US 4421731, US 4415543).
- Purification by sieving and flotation processes, with prior crushing of the phosphogypsum with small quantities of calcium carbonate in order to eliminate the acidity. The gypsum obtained can be used as construction material (US 3951675).
- Washings with sulphuric acid as method of purifying phosphogypsum (US 4388292, US 4301130).
- Drying of the phosphogypsum by contact with hot gas for the production of plaster (US 4086099).
- Production of hemi-hydrate (β) by calcination of chemical gypsum for applications in the construction industry (US 4533528).
- Obtaining of anhydride by calcination of phosphogypsum at between 800 and 1200 °C, which is mixed with lime and potassium sulphate for use in the manufacture of cements and plasterboards (US 4151000).
- Granulation of mixtures of phosphogypsum, natural gypsum and limestone with solutions of ligsulphate in the agricultural and cement industry (US 4.954.134).

The technological process associated with the invention notably simplifies the number and type of unitary operations (elimination of counter-current washes and filtering), along with a reduction in energy costs due to operating at low temperatures (150 °C vs. 800-1200 °C of other processes) for short times (1-2 hours), reduction in quantities of neutralising agents (maximum of 10 %), as well as minimising the volume of water required in the process and, in addition, the total time for processing from damp phosphogypsum as far as obtaining a pellet with suitable mechanical properties is less than 24 hours.

The product is presented in the form of pellets which allows for easy handling and a reduction in fines.

The final composition of the phosphogypsum obtained in this invention is similar to that of natural gypsums and compatible with Portland cement type formulations.

### DESCRIPTION OF THE PROCESS

The present invention relates to a process for the chemical and physical adaptation of phosphogypsum characterised in that it comprises three unitary operations named drying, mixing for reactions in the solid state, and agglomeration and in that the drying operation comprises at least pre-drying between ambient temperature and 40°C, and drying-dehydration between 60 and 250°C, preferably between 60 and 150°C.

The process of the present invention describes the application of a novel process for the chemical and physical adaptation of chemical gypsum or phosphogypsum coming from the production of phosphoric acid and its use as a setting retarding agent in Portland type cements or in the preparation of other materials for construction. The adaptation is based on reactions in the solid state or in the presence of small amounts of water between the phosphogypsum and the agglutinating-neutralising agents, primarily by the application of oxy- and hydroxy-compounds, without rejecting the respective carbonates, of magnesium, aluminium and mainly calcium carbonate, along with mixtures thereof and later preparation of self-hardening pellets which facilitate its transport and handling.

The technological process associated with the invention notably simplifies the number and type of unitary operations, and the preparation of pellets of mixtures of phosphogypsum, along with a reduction in energy costs due to operating at low temperatures (150 °C) for short times (1-2 hours) and a reduction in the quantities of neutralising agents, and it also minimise the volume of water required in the process.

In the present invention the process preferably involves chemical adaptation, by means of applying an agglutinating-neutralising agent, normally a base of the type hydrated lime or calcium oxide along with compounds of the carbonate type and those of other metals such as magnesium or aluminium, simultaneously with the physical adaptation or obtaining of an agglomerate with suitable mechanical properties, for use as a retardant in Portland type cements. The technology that is proposed in this invention notably simplifies those known so far due to reducing the unitary operations required for the treatment, reduction in energy costs due to operating at low temperatures (150 °C vs. 800-1200 °C), reduction in investment and operating costs and the generation of a positive cash-flow for companies in this sector. This would also entail the replacement of imports of gypsum mineral, the exploitation of waste material from phosphoric acid production plants, and the reduction in environmental liabilities and in the impact of plant operations.

In the mixing operation of the present invention, neutralising-agglutinating agents are preferred added and mixed for the neutralisation and stabilisation of harmful compounds of said phosphogypsum. The mentioned neutralising-agglutinating agents are preferably selected from among oxy- and hydroxy-compounds, respective carbonates, of magnesium, aluminium and mainly calcium and mixtures thereof and can be mixed in a quantity of between 0.5 and 10 % w/w of chemical gypsum for the reaction in the solid state. The mixture of phosphogypsum and neutralising- agglutinating agents can take place between 5 and 60 minutes and preferably between 5 and 12 minutes.

In a preferred embodiment of the present invention, the mixing operation also can comprise the addition of water at between 0.5 and 5 % w/w.

Also in the mixing operation, the neutralisation-stabilisation of harmful compounds of phosphogypsum occurs in a preferred way in the solid state.

The agglomeration operation of the present invention is preferably carried out in a device selected from among pelletising disc, agglomerating drum, agglomerating cone or other device for obtaining an agglomerated or granulated material.

In a preferred embodiment, the agglomeration operation can be carried out by means of the addition of water on the agglomerating disc or other agglomerating device, up to a final content of between 10 and 30 %.

Also in a preferred way, the agglomerated material obtained by the process of the present invention displays hydration reactions which harden said material (self hardening pellets). By this reactions, the agglomerated material acquires mechanical properties of compression strength of between 2 kg/pellet up to 30 kg/pellet and a number of falls greater than 10.

Said hydration reactions which harden said material mentioned above are preferably carried out in the conditions selected from among up to 36 hours at ambient temperature and 4 hours at 40 °C.

In a preferred embodiment of the present invention, the product obtained in the agglomerated operation, without addition of water in said operation, is characterised in that it comprises a crushing step in a ball mill as far as a size less than 45 µm to which is then added up to 40 % by weight of water preferably between 21 and 29 % by weight.

In a preferred embodiment, the process of the present invention consists in an adaptation process based on the application of reactions in the solid state, at low temperature and in three unitary operations as are drying, mixing for reactions in the solid state, and agglomeration, in accordance with the steps stated below:
- Step 1: Pre-drying of the phosphogypsum, whether this be under conditions of ambient pressure and temperature or in an oven at forty degrees Celsius;
- Step 2: Drying-dehydration of the phosphogypsum, at between 60 and 150 and up to 250 degrees Celsius for between one and two hours;
- Step 3: Mixing of the phosphogypsum dehydrated at 150 degrees Celsius with phosphogypsum dried at ambient temperature, in proportions of between 0 and 60 % of phosphogypsum dried at ambient temperature or the use of 100 % of dehydrated phosphogypsum;
- Step 4: Addition and mixing of neutralising-agglutinating agents among which are included oxy- and hydroxy-compounds, without rejecting the respective carbonates, of magnesium, aluminium and mainly calcium, along with mixtures thereof, of between 0.5 and 10 % w/w of chemical gypsum for the reaction in the solid state. The mixture can include the addition of water of between 0 and 5 % w/w. The mixing times are between 5 minutes and 12 minutes, or up to 60 minutes, without rejecting the possibility of other times which might be required depending on nature of the phosphogypsum;
- Step 5: Agglomeration in a pelletising disc, drum or agglomerating cone using water at between 10 and 30 % w/w, with subsequent hardening times, at ambient temperature, for between 24 and 36 hours or 4 hours at 40 °C.

In the case of applications for construction materials, phosphogypsum preferably coming from Step 4 above, may be subjected to fine grinding until a material less than 45 µm is obtained, to which up to 40 % of water is added, preferably between 21 and 29 % by weight, for the preparation of the desired constructive form, whether these be boards, blocks, or any other.

This invention relates also to the material obtained by the process as described above. This material can be described as a modified phosphogypsum where harmful components contained in the same have been neutralised and stabilised.

The modified and agglomerated phosphogypsum displays final free water contents of less than 5 % by weight and contents of free P₂O₅ and F⁻ equal to or less than 0.01 % and down as far as 0.0001 %, which makes it suitable for use in Portland type cement formulations (retardant) without any lessening of the mechanical properties of the concrete resulting from these cements.

The present invention also relates to the use of the material as defined above for its application as cement setting retardant. The setting times for this material can be between 4 hours and a maximum of 8.

This material can be also used as a construction material, and to add the same to Clinker and its application as cement setting retardant.

### BRIEF DESCRIPTION OF THE FIGURE

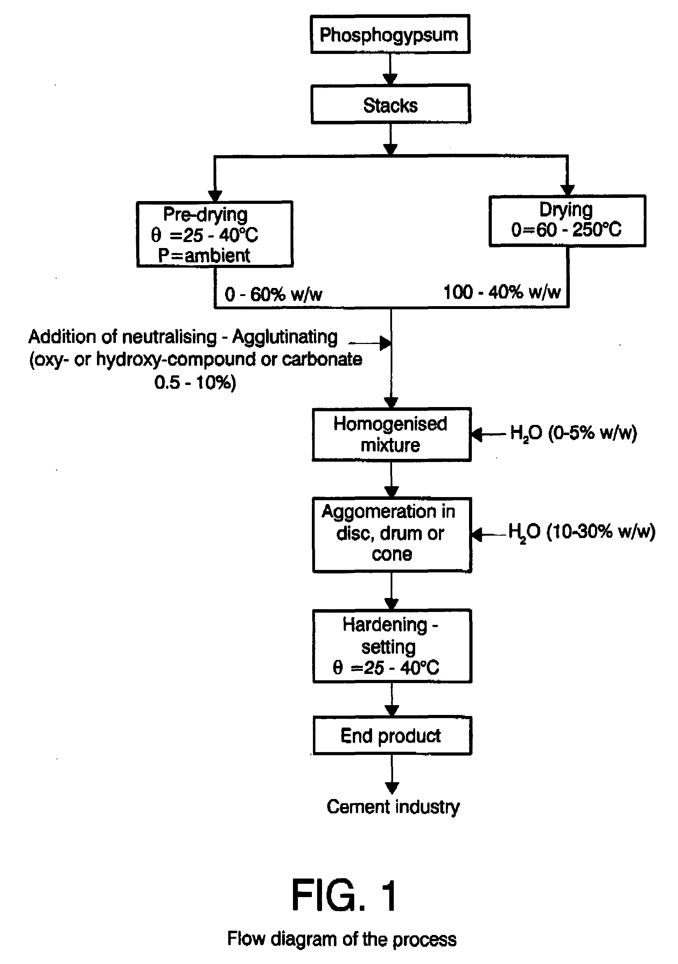

Figure 1: diagram of processes considered in the present invention.

### EXAMPLES OF EMBODIMENT

### Example 1

To 1000 g of a mixture of equal parts made up of 90% of phosphogypsum predried at ambient temperature or at 45 °C plus phosphogypsum dried at 150°C, is added 10 % of calcium hydroxide and they are mixed dry for 10 minutes in a paddle mixer rotating at 15 rpm. The mix is then agglomerated in a disc, with up to 20 % of water being added to the disc. The pellets or agglomerates are dried at a temperature of 40 °C for 4 hours. A pellet is obtained with sizes from 15 to 20 mm and mechanical properties such as compression strength of 30 kg/pellet and number of falls equal to or greater than 30.

### Example 2

To 950 g of phosphogypsum dried at 150° °C is added 50 grams of magnesium and calcium hydroxide and it is then mixed in a paddle mixer or drum for 12 minutes at a rotation speed of 15 rpm with the addition of 5 % by weight of water. The mixture is then fed into a pelletising disc or drum and agglomeration water is added of up to 22 %. The self-hardening pellets discharged from the disc are left to set for at least 24 hours, until a mechanical strength of 20 kg/pellet and number of falls of at least 16 are obtained.

The modified phosphogypsum associated with this invention was used as retardant for Portland cements, obtaining a product with physical and chemical characteristics that meet quality standards for cements according to national and international norms.

This invention would entail the replacement of imports and a reduction in the use of natural gypsum along with a lessening of the environmental impact caused by mining operations for the extraction of the mineral. In addition, waste material is exploited coming from the wet process phosphoric acid production plants, granting the opportunity to reuse and apply this reject material in the construction industry, as well as reducing the environmental liabilities and the effect on the terrain and on landscapes.

## Claims

1. Process for the chemical and physical adaptation of phosphogypsum **characterised in that** it comprises three unitary operations named drying, mixing for reactions in the solid state, and agglomeration and **in that** the drying operation comprises at least pre-drying between ambient temperature and 40°C, and drying-dehydration between 60 and 250°C.

2. Process for the chemical and physical adaptation of phosphogypsum according to claim 1, **characterised in that** drying operation comprises pre-drying between ambient temperature and 40°C, and drying-dehydration between 60 and 150°C.

3. Process for the chemical and physical adaptation of phosphogypsum according to claim 1, **characterised in that** in the mixing operation, neutralising-agglutinating agents are added and mixed for the neutralisation and stabilisation of harmful compounds of said phosphogypsum.

4. Process for the chemical and physical adaptation of phosphogypsum according to claim 3, **characterised in that** the neutralising-agglutinating agents are selected from among oxy- and hydroxy-compounds, respective carbonates, of magnesium, aluminium and mainly calcium and mixtures thereof.

5. Process for the chemical and physical adaptation of phosphogypsum according to claims 3 and 4, **characterised in that** the neutralising-agglutinating agents are mixed in a quantity of between 0.5 and 10 % w/w of chemical gypsum for the reaction in the solid state.

6. Process for the chemical and physical adaptation of phosphogypsum according to one of claims 3 to 5, **characterised in that** the mixture of phosphogypsum and neutralising- agglutinating agents takes place between 5 and 60 minutes.

7. Process for the chemical and physical adaptation of phosphogypsum according to claim 6, **characterised in that** the mixture of phosphogypsum and neutralising- agglutinating agents takes place between 5 and 12 minutes.

8. Process for the chemical and physical adaptation of phosphogypsum according to claim 3, **characterised in that** the mixing operation also comprises the addition of water at between 0.5 and 5 % w/w.

9. Process for the chemical and physical adaptation of phosphogypsum according to claim 3, **characterised in that** in the mixing operation, the neutralisation-stabilisation of harmful compounds of phosphogypsum occurs in the solid state.

10. Process for the chemical and physical adaptation of phosphogypsum according to claim 1, **characterised in that** the agglomeration operation is carried out in a device selected from among pelletising disc, agglomerating drum, agglomerating cone or other device for obtaining an agglomerated or granulated material.

11. Process for the chemical and physical adaptation of phosphogypsum according to claim 10, **characterised in that** the agglomeration operation is carried out by means of the addition of water on the agglomerating disc or other agglomerating device, up to a final content of between 10 and 30 %.

12. Process for the chemical and physical adaptation of phosphogypsum according to any of claims 10 and 11, **characterised in that** the agglomerated material displays hydration reactions which harden said material.

13. Process for the chemical and physical adaptation of phosphogypsum according to claim 12, **characterised in that** the agglomerated material acquires mechanical properties of compression strength of between 2 kg/pellet up to 30 kg/pellet and a number of falls greater than 10.

14. Process for the chemical and physical adaptation of phosphogypsum according to claim 12, **characterised in that** said hydration reactions which harden said material are carried out in the conditions selected from among up to 36 hours at ambient temperature and 4 hours at 40 °C.

15. Process for the chemical and physical adaptation of phosphogypsum according to any of claims 1 to 10, **characterised in that** it comprises a crushing step in a ball mill as far as a size less than 45 µm to which is then added up to 40 % by weight of water.

16. Process for the chemical and physical adaptation of phosphogypsum according to claim 15, **characterised in that** the water is added in an amount between 21 and 29 % by weight.

17. Material obtained by the process as described in any of claims 1 to 16, **characterised in that** it is a modified phosphogypsum where harmful components contained in the same have been neutralised and stabilised.

18. Use of the material as defined in claim 17, for its application as a construction material.

19. Use of the material as defined in claim 18, for its addition to Clinker and its application as cement setting retardant.

20. Use of the material according to claim 19, **characterised in that** the setting times are between 4 hours and a maximum of 8.
